# EUROPEAN PATENT SPECIFICATION

(11) **EP 3 184 360 B1**
(45) Date of publication and mention of the grant of the patent: **24.02.2021**
(21) Application number: 16382574.8
(22) Date of filing: 29.11.2016
(51) Int. Cl.: B60P 3/24, C12H 1/16

(54) **SYSTEM FOR DISTRIBUTING A LIQUID WITH NATURAL FERMENTATION GAS FOR FOOD USE**
SYSTEM ZUR VERTEILUNG EINER FLÜSSIGKEIT MIT NATÜRLICHEM GÄRGAS FÜR LEBENSMITTEL
SYSTÈME DE DISTRIBUTION D'UN LIQUIDE COMPRENANT UN GAZ DE FERMENTATION NATURELLE À USAGE ALIMENTAIRE

(30) Priority: 30.11.2015 ES 201531326
(43) Date of publication of application: 28.06.2017
(73) Proprietor: Lions Beer, Cerveceros Artesanales Leoneses, S.L., 24197 Villarrodrigo de las Regueras (ES)
(72) Inventor: Gutiérrez González, Francisco Javier, 24197 Villarrodrigo de las Regueras (ES)
(74) Representative: Carlos Hernando, Borja

(56) References cited:
- DE-U1- 7 713 351
- ES-U- 1 065 484
- US-A- 4 708 938

## Description

### OBJECT OF THE INVENTION

The present invention relates to a system for distributing a liquid with natural fermentation gas for food use, preferably to be adapted to a light transport vehicle and especially designed for allowing its distribution at local level, that is to say, not wide distribution or long journeys, commercial isochronous distribution of up to 3 hours, including the urban area and with up to 500 km of service autonomy. The distribution of the liquid for food use, preferably artisanal beer, is thus achieved without any interferences following its preparation, without the properties of the same being affected, enabling the artisanal beer to be served directly and in the same conditions in which it is produced. By means of the present system, it can be ensured that the consumption at the destination is the same as it would be at its origin, without having undergone transformations or interferences as occurs with conventional distribution of industrial commercial beers which are subjected to different processes affecting the characteristics of the product in order to allow it to be distributed and transported.

The field of application of the present invention falls within the sector of the industry dedicated to the manufacture of transport systems and their components, in particular transport vehicles, being particularly aimed at the field of transportation of liquid beverages with natural fermentation gas for food use, in particular artisanal beer and also encompassing the industry dedicated to the distribution and supply of said types of products.

### BACKGROUND OF THE INVENTION

The present invention is applicable to any liquid with natural fermentation gas for food use such as artisanal beer, sparkling wines, champagne or natural ciders, although the description will be centered on its application to artisanal beer even though the distribution conditions are maintained the same in the case of distribution of the other liquids cited or others liquids with the same conditions Systems for distributing such liquids are known in the prior art, e.g. from ES 1 065 484 U.

In the prior art, mainly two types of beers can be given, artisanal beers and industrial or commercial beers. The main difference between them is that in the former, the carbon dioxide, CO₂, produced naturally when the yeast ferments is preserved up to its consumption, while in the commercial beers, said natural CO₂ is removed due to the pasteurization process to which the beer is subjected in order to ensure its preservation in different environments and mainly to ensure its preservation in the presence of oxygen. Said CO₂ is added artificially prior to the consumption of the beer.

After pasteurizing the commercial beers, they are packaged adding CO₂ into bottles and cans, however, the beer barrels do not include CO₂ which is added artificially at the time of serving the same. Likewise, the transport of large quantities of beer is carried out by means of stainless steel tanker trucks due to the fact that it is pasteurized, which means its transport conditions are not particularly demanding, beyond the requirements demanded of the road transport means.

However, it is desirable to be able to provide the consumer with the possibility of consuming the beer in the same conditions and with the same organoleptic characteristics of the point of origin or preparation without having been subjected to treatments or processes which cause a transformation of the same, including its CO₂ content. This is especially interesting and particularly in demand in the case of artisanal beers since the characteristics of the same are much more diverse and particular to each one, something which the consumers of the same value.

The objective of the invention is therefore to develop a distribution system which enables a liquid with natural fermentation gas for food use to be distributed, preferably artisanal beer in the same conditions in which it is produced in larger quantities than those of its normal distribution, barrel, can or bottle such that its consumption at the destination is the same as at its origin without the liquid having undergone any transformation or interference. The distribution should be carried out in isobaric conditions and with temperature control such that the organoleptic stability of the unpasteurized liquid product is ensured during a sufficient period for its transport and service.

### DESCRIPTION OF THE INVENTION

The object of the present invention is thus a system for distributing a liquid with natural fermentation gas for food use such as artisanal beer according to claim 1. Specifically, the invention relates to a system for distributing a liquid with natural fermentation gas for food use which incorporates:
- an isobaric tank with at least one first opening for the entry of air and a second opening for the entry and exit of liquid,
- a bag arranged in the interior of the tank with an opening matching the second opening of the tank,
- a connection which allows the opening of the bag to be joined to the second opening of the tank, enabling the introduction and removal of the liquid in the bag and therefore in the tank,
- coolant equipment for the tank, and
- a compressor for maintaining the air pressure between the tank and the bag/package constant.

The distribution system is especially designed for distributing at local level and, optionally its direct service, of the foodstuff liquid with natural fermentation gas, preferably artisanal beer, maintaining said liquid in the same conditions in which it is produced at the preparation point which is located at a maximum of 500 km away. Preferably, said system comprises a light road transport vehicle, although other options such as boats may be used. In particular, the conditions of the distribution system which allow the properties of the liquid product to be maintained are:
- the product does not enter into contact with oxygen (O₂) when it is a fresh, unpasteurized product,
- the cold chain is maintained from its preparation up to its supply point,
- the natural characteristics of the liquid product are maintained since it is not subjected to any interference or transformation process and
- it is transported at a constant low pressure.

In view of the foregoing, the characteristics of the distribution system allow the liquid product to be maintained isolated from oxygen, at a constant pressure and at a determined temperature from when the product is introduced into the distribution system from the tank in which it is stored after its preparation and up to its supply point.

To this end and as has been put forward, the system comprises a bag arranged in the interior of a tank such that due to the properties of the material of the bag, which is mainly impermeable to oxygen and opaque and due to the connection between the bag and the tank, the liquid is prevented from entering into contact with light and oxygen from its preparation up to its supply. Although throughout the description and claims, it is termed a bag, it may be a package or container of flexible material and having the cited properties, said material preferably being a food grade PET material which is authorized in the step for using the distribution system. Likewise, the bag, container or package which is single-use, should be flexible in order to be able to be introduced into the interior of the tank prior to the introduction of the liquid and once the liquid is removed, to be able to remove the bag, container or package so that it can be replaced with another. The bags should be replaced in order to ensure sterility since they cannot be cleaned once used and due to the fact that they are used for transporting a natural food product.

The supply from the distribution system can be carried out in different ways, for example:
- directly into a glass, a solution that is of particular interest for events or functions in which a large number of people are meeting and for which purpose a tap is connected to the connection between the tank and the bag,
- into bottles for the subsequent distribution of the same,
- into cans for the subsequent distribution of the same,
- into barrels for the subsequent distribution of the same, or
- into other storage or service tanks.

As has been mentioned, the isobaric tank has a first opening for the entry of air which is situated between the walls of the tank and the exterior of the bag to thereby maintain the pressure constant and preferably, in the case of artisanal beer, at around 1 bar which is the pressure generated naturally by the CO₂ of the beer. Likewise, said tank comprises a second opening in which the opening of the bag is situated and which are connected by means of a connection which complies with food regulations, as it has an oxygen check valve in order to allow the entry and exit of the liquid product, but not of oxygen, thus preventing the contact of said liquid product with the oxygen of the environment. Said connection preferably includes a volumetric meter or flowmeter.

In order to ensure that the properties of the liquid product are kept invariable and also to ensure its supply at an optimal temperature, preferably between 2° and 4° in the case of artisanal beer, the system comprises coolant equipment which is autonomous when the vehicle is stopped due to an electric generator, although the battery of the truck is used for its power supply when the vehicle is operational. Said coolant equipment is preferably situated below the tank, although it could be embedded in the walls themselves of the tank or in an independent compartment close to the tank.

In view of the foregoing, the distribution system resolves the technical problem of distributing a liquid with natural fermentation gas for food use, such as artisanal beer, sparkling wine, champagne or natural cider, from the origin up to the point of sale, maintaining its original characteristics.

As has been mentioned, the system preferably comprises a light transport vehicle for local distribution, with an area of commercial isochronous operation of up to 3 hours and with service autonomy of up to 500 km. Said vehicle is preferably a "light vehicle" for road transport with a MAW (maximum authorized weight) of less than 3,500 kg and with a maximum load of 1,000 liters which is equivalent to the maximum capacity of the bag such that it is not subjected to the costs and requirements applicable to road transport and allows its distribution in an urban environment where the spaces for vehicle traffic are limited.

As has been mentioned, it has a dual use, being suitable both for direct service, for example at events and fairs such as for distribution of the liquid product to third parties, being especially suited to urban areas, given its complete accessibility at any point as it is a distribution system, preferably via a light vehicle with small dimensions. In addition, given that some of the liquid products at which it is directed, for example artisanal beer or natural cider, are products that mainly have a local focus, this novel vehicle opens up new possibilities to the sector for its distribution and development.

The system further comprises other components such as a hose, a hose reel, as well as a compartment for tools and other elements which allow it to also be used as a distribution vehicle.

### DESCRIPTION OF THE FIGURES

In order to facilitate the understanding of the present invention and to complete the description of the same, a set of figures is included in an illustrative and non-limiting manner.

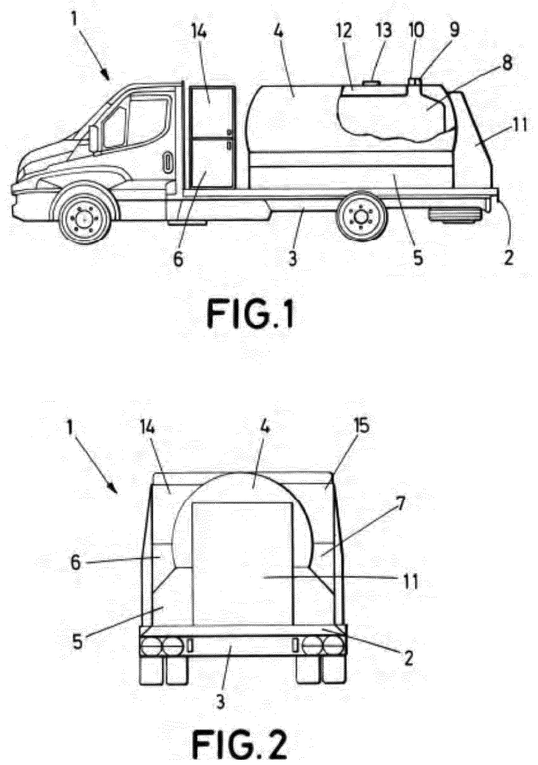

Figure 1 shows a schematic, side elevation and partially cross-sectioned view of an exemplary embodiment of the system for distributing a liquid product, for example artisanal beer using a road transport vehicle object of the invention, the main parts and elements that it comprises being visible.
Figure 2 shows a schematic, rear elevation view of the example of the system according to the invention shown in the previous figure.

### PREFERRED EMBODIMENT OF THE INVENTION

Thus, as is observed in said figures, the system for distributing artisanal beer, although it could be applied to other liquids with natural fermentation gas for food use, of the preferred exemplary embodiment comprises a light transport vehicle (1) with a MAW of less than 3,500 kg and maximum load of 1,000 liters, which has a platform (2) coupled to the chassis (3) of the vehicle (1) wherein it essentially incorporates a cistern type tank (4) for liquids, a cooler (5) situated at the bottom associated with the tank in order to maintain the interior temperature of the tank controlled between 2 and 4 degrees, having a compressor (6) and an electric generator (7) which enables its autonomous operation without disregarding its coupling to the means of the vehicle itself when the engine of the same is operational. The cooler (5) or coolant equipment comprises a probe for measuring the temperature of the tank as well as an entry for water and glycol for checking that the temperature of the tank is suitable.

Said tank (4) comprises a hermetic bag (8) that is opaque and impermeable to oxygen made of a food grade PET material in order to contain the artisanal beer isolated from oxygen and light and which, by means of a connection joining the opening of the bag to a second opening of the tank, the connection having a valve, enables the entry and exit (9) of the beer in the bag and therefore in the tank, preferably passing through a flowmeter (10). A hose may be coupled to said connection which is gathered on a reel (11) provided for such purpose. In any case, there is an air chamber (12) between the cited interior bag (8) and the walls of the tank (4) which, through a first opening in the tank, allows the entry of air (13) provided for such purpose and thus maintains its pressure controlled and constant at 1 bar.

In an alternative arrangement to that shown in the figures, the second opening of the tank is preferably situated in the lower and rear portion of the same such that the three-way valves for regulating the entry and exit of liquid into the tank through said hose are situated between said second opening of the tank and the connection of the hose. The hose can be disconnected from said connection and at least one tap connected to the same to serve the beer directly from the tank.

The circuit preferably makes it possible for the liquid to always pass in the same direction through the flowmeter which is preferably magnetic so that it does not enter into contact with the liquid, irrespective of whether the liquid exits or enters the tank. This is achieved due to the three-way valves previously cited. Said flowmeter is situated between the second opening and the connection to the hose and specifically between the three-way valves such that the liquid which enters or exits the tank always passes through the flowmeter in the same direction.

A deviation may exit the second opening in order to directly connect, and without passing through the cited flowmeter, at least one tap to serve the beer directly from the tank.

Therefore, as has been mentioned, the system allows the connection of at least one tap to serve or "pull" the beer, preferably artisanal beer, directly from the tank, for which purpose the tap can either be connected directly to the connection of the hose situated immediately behind the flowmeter or to an additional connection derived from the second opening of the tank.

The system has different control devices, which are not shown in the figures. In particular, it has a first control panel, situated close to the tank, preferably in the rear portion at one side of the same and also in the rear portion of the vehicle (1) in which the elements for measuring the temperature and the different pressures are included, in addition to different switches such as for example:
- for selecting from among the electrical power source of the generator (7), a power source external to the system or the vehicle,
- for connecting the electric generator (7),
- for activating the flowmeter (10),
- for controlling the compressor (6) manually or automatically or turning it off,
- for controlling the cooler (5) manually or automatically or turning it off,
- for automatically activating the reel (11) of the hose,
- for activating a pump for cleaning the interior of the tank (8).

Likewise, a second control panel is situated at the side of the tank (8) opposite that of the first control panel, also in the rear portion of the vehicle (1), in which the device for counting the liters or flowmeter (10) is included as well as a sight glass for checking the passage of liquid, preferably artisanal beer, although it could also be the liquid for cleaning the interior of the tank (8).

The reel (11) of the hose is preferably situated between both control panels, preferably made of food grade stainless steel like all the element which may be in contact with the liquid.

Optionally, the system, and in particular the vehicle (1), has a barrel compartment (14) for transporting barrels of the same product, that is to say, the artisanal beer, also in conditions isolated from oxygen and light and at a pressure of 1 bar.

Lastly and also optionally, the vehicle has a tool compartment (15).

In conclusion, the distribution system object of the invention, being a light transport vehicle, allows the transport of the artisanal beer without modifying its properties as it comprises a cistern type tank (4) for liquids which keeps the product protected from the light and protected from the exterior oxygen, due to the interior bag (8), maintaining the product at a controlled temperature of between 2 and 4 degrees due to the coolant equipment (5) and which maintains the product at constant pressure of 1 bar owing to the entry of air (13) into the air chamber (12) of the tank (4).

## Claims

1. A system for transporting and distributing a liquid with natural fermentation gas for food use **characterized in that** it comprises:
- a light transport engine vehicle with a MAW of less than 3,500 kg, such as a truck,
- an isobaric tank (4) with at least one first opening for the entry of air and a second opening (9) for the entry and exit of liquid,
- a bag (8) with a capacity larger than those of a barrel, can or bottle, and up to 1,000 liters, arranged in the interior of the tank with an opening matching the second opening (9) of the tank,
- a connection which allows the opening of the bag (4) to be joined to the second opening (9) of the tank (4), enabling the introduction and removal of the liquid in the bag (8) and therefore in the tank (4),
- coolant equipment (5) for the tank (4), fed by an autonomous electric generator (7) for providing energy when the vehicle is stopped and fed by the battery of the vehicle for providing energy when the vehicle is operational,
- a first control panel, situated close to the tank (4), in which the elements for measuring the temperature and the different pressures are included, the first control panel further comprising a switch for selecting from among the electrical power source of the generator (7), the vehicle or a power source external to the system, and
- a compressor (6) for maintaining the air pressure between the tank (4) and the bag (8) constant.

2. The system according to claim 1, **characterized in that** the bag (8) is impermeable to oxygen and is opaque.

3. The system according to any of the preceding claims, **characterized in that** the connection comprises an oxygen check valve in order to allow the entry and exit of liquid, but not of oxygen, thus preventing the contact of the liquid with the oxygen of the environment.

4. The system according to any of the preceding claims, **characterized in that** it comprises a flowmeter (10) in the connection.

5. The system according to any of the preceding claims, **characterized in that** the pressure is 1 bar.

6. The system according to any of the preceding claims, **characterized in that** the coolant equipment (5) is situated in the lower portion of the tank.

7. The system according to any of the preceding claims, **characterized in that** it comprises an electric generator (7).

8. The system according to claim 7, **characterized in that** the generator (7) is autonomous.

9. The system according to any of the preceding claims, **characterized in that** it comprises a barrel compartment (14).

## Patentansprüche

1. System für Transport und Verteilung einer Flüssigkeit mit natürlichem Gärgas für Lebensmittel, **dadurch gekennzeichnet, dass** es Folgendes umfasst:
- ein leichtes Transportkraftfahrzeug mit 3.500 kg zulässigem Höchstgewicht wie z. B. ein Lastkraftwagen,
- einen isobaren Tank (4) mit mindestens einer ersten Öffnung für den Eintritt von Luft und einer zweiten Öffnung (9) für den Ein-und Austritt von Flüssigkeit,
- einen im Inneren des Tanks angeordneten Beutel (8) mit einem Fassungsvermögen von bis zu 1.000 Litern, das größer als das eines Fasses, eines Kanisters oder einer Flasche ist, und einer zur zweiten Öffnung (9) des Tanks passenden Öffnung,
- eine Verbindung, die es ermöglicht, die Öffnung des Beutels (4) mit der zweiten Öffnung (9) des Tanks (4) zusammenzuführen, und so das Einfüllen und die Entnahme der Flüssigkeit in den/aus dem Beutel (8) und damit in den/aus dem Tank (4) ermöglicht,
- eine Kühlmittelanlage (5) für den Tank (4), die zur Energieversorgung bei stehendem Fahrzeug von einem autarken Stromgenerator (7) und zur Energieversorgung bei laufendem Fahrzeug von der Batterie des Fahrzeugs gespeist wird,
- ein erstes Bedienfeld in der Nähe des Tanks (4), das die Elemente zum Messen der Temperatur und der verschiedenen Drücke enthält, wobei das erste Bedienfeld ferner einen Schalter zur Wahl zwischen der Stromversorgung durch den Generator (7), das Fahrzeug und eine systemexterne Stromquelle umfasst, und
- einen Kompressor (6) zur Konstanthaltung des Luftdrucks zwischen dem Tank (4) und dem Beutel (8).

2. System nach Anspruch 1, **dadurch gekennzeichnet, dass** der Beutel (8) sauerstoff- und lichtundurchlässig ist.

3. System nach einem der vorstehenden Ansprüche, **dadurch gekennzeichnet, dass** die Verbindung ein Sauerstoff-Rückschlagventil aufweist, das den Ein- und Austritt von Flüssigkeit, nicht aber von Sauerstoff ermöglicht und so den Kontakt der Flüssigkeit mit dem Sauerstoff der Umgebung verhindert.

4. System nach einem der vorstehenden Ansprüche, **dadurch gekennzeichnet, dass** die Verbindung einen Durchflussmesser (10) aufweist.

5. System nach einem der vorstehenden Ansprüche, **dadurch gekennzeichnet, dass** der Druck 1 bar beträgt.

6. System nach einem der vorstehenden Ansprüche, **dadurch gekennzeichnet, dass** sich die Kühlmittelanlage (5) am unteren Teil des Tanks befindet.

7. System nach einem der vorstehenden Ansprüche, **dadurch gekennzeichnet, dass** es einen Stromgenerator (7) umfasst.

8. System nach Anspruch 7, **dadurch gekennzeichnet, dass** der Generator (7) autark ist.

9. System nach einem der vorstehenden Ansprüche, **dadurch gekennzeichnet, dass** es eine Fasskammer (14) umfasst.

## Revendications

1. Un système de transport et de distribution d'un liquide comprenant un gaz naturel de fermentation à usage alimentaire, **caractérisé en ce qu'**il comprend :
- un véhicule léger à moteur de transport d'une puissance MAW inférieure à 3 500 kg, tel qu'un camion,
- un réservoir isobare (4) ayant au moins une première ouverture pour l'entrée de l'air et une deuxième ouverture (9) pour l'entrée et la sortie du liquide,
- un sac (8) d'une capacité supérieure à celle d'un tonneau, d'une boîte ou d'une bouteille, et jusqu'à 1 000 litres, disposé à l'intérieur du réservoir ayant une ouverture correspondant à la deuxième ouverture (9) du réservoir,
- une connexion qui permet de relier l'ouverture du sac (4) à la deuxième ouverture (9) du réservoir (4), permettant l'introduction et l'évacuation du liquide dans le sac (8) et donc dans le réservoir (4),
- un équipement de refroidissement (5) pour le réservoir (4), alimenté par un générateur électrique autonome (7) pour fournir de l'énergie lorsque le véhicule est à l'arrêt et alimenté par la batterie du véhicule pour fournir de l'énergie lorsque le véhicule est opérationnel
- un premier tableau de commande, situé à proximité du réservoir (4), dans lequel sont inclus les éléments de mesure de la température et des différentes pressions, le premier tableau de commande comprenant en outre un commutateur permettant de choisir entre la source d'énergie électrique du générateur (7), le véhicule ou une source d'énergie extérieure au système, et
- un compresseur (6) pour maintenir constante la pression de l'air entre le réservoir (4) et le sac (8) et

2. Le système selon la revendication 1, **caractérisé en ce que** le sac (8) est imperméable à l'oxygène et est opaque.

3. Le système selon l'une des revendications précédentes, **caractérisé en ce que** le raccord comprend un clapet anti-retour d'oxygène afin de permettre l'entrée et la sortie de liquide, mais pas d'oxygène, empêchant ainsi le contact du liquide avec l'oxygène de l'environnement.

4. Le système selon l'une des revendications précédentes, **caractérisé en ce qu'**il comprend un débitmètre (10) dans la connexion.

5. Le système selon l'une des revendications précédentes, **caractérisé en ce que** la pression est de 1 bar.

6. Le système selon l'une des revendications précédentes, **caractérisé en ce que** l'équipement de refroidissement (5) est situé dans la partie inférieure du réservoir.

7. Le système selon l'une des revendications précédentes, **caractérisé en ce qu'**il comprend un générateur électrique (7).

8. Le système selon la revendication 7, **caractérisé en ce que** le générateur (7) est autonome.

9. Le système selon l'une des revendications précédentes, **caractérisé en ce qu'**il comprend un compartiment à baril (14).
